# EUROPÄISCHE PATENTSCHRIFT

(11) **EP 3 436 687 B1**
(45) Veröffentlichungstag und Bekanntmachung des Hinweises auf die Patenterteilung: **22.01.2020**
(21) Anmeldenummer: 17702081.5
(22) Anmeldetag: 27.01.2017
(51) Int. Cl.: F02P 9/00, F02P 17/12, G01M 15/11, F02P 5/152, H01T 15/00, H01T 13/60, F02P 15/10, F02D 35/02, F02P 3/04, F02P 3/08, F02P 15/08

(54) **VERFAHREN ZUM BETREIBEN EINES MIT EINEM HOCHSETZSTELLER AUSGESTATTETEN ZÜNDSYSTEMS**
METHOD FOR OPERATING A WITH A STEP-UP CONVERTER PROVIDED SPARK SYSTEM
MÉTHODE POUR EXPLOITER UN SYSTÈME D'ALLUMAGE POURVU D'UN CONVERTISSEUR ÉLEVATEUR

(30) Priorität: 01.04.2016 DE 102016205431
(43) Veröffentlichungstag der Anmeldung: 06.02.2019
(73) Patentinhaber: Robert Bosch GmbH, 70442 Stuttgart (DE)
(72) Erfinder: SKOWRONEK, Tim, 87547 Missen-Wilhams (DE); PAWLAK, Thomas, 87509 Immenstadt (DE); BITTNER, Felix, 87616 Marktoberdorf (DE)
(86) Internationale Anmeldenummer: PCT/EP2017/051841
(87) Internationale Veröffentlichungsnummer: WO 2017/167467

(56) Entgegenhaltungen:
- WO-A1-2014/041050
- WO-A1-2015/071049
- WO-A1-2015/156296
- WO-A1-2015/156297
- WO-A1-2015/156298
- US-A1- 2015 152 832

## Beschreibung

### Stand der Technik

Die Erfindung geht aus von einem Verfahren zum Betreiben eines Zündsystems nach der Gattung des Hauptanspruchs.

Es ist schon ein Verfahren zum Betreiben eines Zündsystems aus der DE102014 216030 A1 bekannt, bei dem eine Primärspule eines ersten Spannungserzeugers bestromt wird und die Bestromung der Primärspule zum Erzeugen einer Spannung in einer Sekundärspule des ersten Spannungserzeugers unterbrochen wird, um einen Zündfunken an einer Funkenstrecke zu erzeugen. Weiterhin wird zum Stützen des von dem ersten Spannungserzeuger erzeugten Zündfunkens ein als Hochsetzsteller ausgebildeter zweiter Spannungserzeuger betrieben, um den erzeugten Zündfunken an der Funkenstrecke länger aufrechtzuerhalten. Während des Betriebs des Hochsetzstellers wird eine definierte regel- bzw. steuerbare Leistung an den Zündfunken abgegeben. Bei bestimmten Brennverfahren im Verbrennungsmotor gibt es im Brennraum jedoch sehr hohe Turbulenzen, die die Zündfunken an den Elektroden der Zündkerzen so stark auslenken, dass diese drohen abzureißen bzw. instabil werden. Durch die Auslenkung des Funkens steigt die elektrische Spannung über den Elektroden der Zündkerzen stark an, wobei der Funkenstrom entsprechend stark abfällt und somit ein Funkenabriss droht. Daher wird auf der Sekundärseite des Zündsystems der sekundärseitige Strom oder die sekundärseitige Spannung gemessen, um einen drohenden Funkenabriss erkennen zu können und um den Hochsetzsteller in Reaktion auf einen erkannten Funkenabriss abzuschalten. Würde der Hochsetzsteller nach einem Funkenabriss weiter betrieben werden, käme es zu einem starken Anstieg der Ausgangsspannung des Hochsetzstellers, der die Bauteile bzw. Komponenten des Hochsetzstellers beschädigen oder zerstören könnte. Bei hohen Brennraumturbulenzen steigt die Spannung über den Zündkerzenelektroden stark an und die Wahrscheinlichkeit eines Funkenabrisses steigt. Wenn dieser Funkenabriss vor der erfolgreichen Einleitung der Gemischenflammung auftritt ergibt sich ein unerwünschter Zündaussetzer.

Dokument WO 2015/156296 A1 offenbart auch alle Merkmale des Oberbegriffs des Anspruchs 1.

### Vorteile der Erfindung

Das erfindungsgemäße Verfahren zum Betreiben eines Zündsystems mit den kennzeichnenden Merkmalen des Hauptanspruchs hat demgegenüber den Vorteil, dass die Funkenbrenndauer der Zündfunken bei hohen Turbulenzen im Brennraum erhöht wird und Zündaussetzer vermieden werden, indem das Zündsystem bei drohenden Funkenabrissen jeweils einen erneuten Zündvorgang einleitet. Dies wird erfindungsgemäß erreicht, indem ermittelt wird, ob der Funkenstrom einen ersten Schwellwert unterschreitet, was eine Schwellwertbedingung erfüllen würde. Alternativ könnte auch ermittelt werden, ob die Funkenspannung einen zweiten Schwellwert überschreitet, oder ob der Funkenstrom gleich null ist, oder ob der Funkenstrom gleich null ist und nach Ablauf einer vorbestimmten Zeit immer noch gleich null ist. Wenn die Schwellwertbedingung erfüllt ist, wird ein erneutes Bestromen der Primärspule des ersten Spannungserzeugers durchgeführt, und zwar für eine vorbestimmte Zeit oder solange, bis der Primärspulenstrom einen vorbestimmten Schwellwert erreicht. Daraufhin wird die Bestromung der Primärspule zum Erzeugen einer Spannung in der Sekundärspule des ersten Spannungserzeugers unterbrochen, um einen neuen Zündfunken an der Funkenstrecke zu erzeugen. Anschließend wird der zweite Spannungserzeuger zum Stützen des von dem ersten Spannungserzeuger erzeugten Funkenstroms weiterbetrieben oder erneut eingeschaltet, um den erzeugten Zündfunken an der Funkenstrecke aufrechtzuerhalten.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist, wenn der erste oder zweite Schwellwert abhängig ist von einem oder mehreren Betriebsparametern, insbesondere der Drehzahl, da auf diese Weise vermieden wird, dass der erste oder zweite Schwellwert unter bestimmten Betriebsbedingungen in einem Bereich liegt, in dem sich die Zündfunken selbst stabilisieren könnten. In diesem Fall könnte eine erfindungsgemäße Wiederzündung eine Entflammung des Kraftstoffgemisches behindern oder verzögern.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: ein Zeitdiagramm zum Vergleich sich gemäß dem Stand der Technik und der vorliegenden Erfindung einstellender Zündströme;
- Figur 2: ein Schaltbild gemäß einem ersten Ausführungsbeispiel eines erfindungsgemäßen Zündsystems;
- Figur 3: Darstellungen von Strom-Zeitdiagrammen sowie zugehöriger Schaltsequenzen für die in Figur 2 gezeigte Schaltung;
- Figur 4: ein Schaltbild gemäß einem zweiten Ausführungsbeispiel eines erfindungsgemäßen Zündsystems;
- Figur 5: ein Schaltbild gemäß einem dritten Ausführungsbeispiel eines erfindungsgemäßen Zündsystems;
- Figur 6: Darstellungen von Strom-Zeitdiagrammen sowie zugehöriger Schaltsequenzen für die in Figur 4 und Figur 5 gezeigte Schaltung; und
- Figur 7: ein Strom/Spannungs-Zeitdiagramm, das den Verlauf des Primärspulenstroms i_{ZS}, des Sekundärspulenstroms i₂ und der Ausgangsspannung u₂ während der erfindungsgemäßen Verfahrensschritte zeigt.

### Ausführungsformen der Erfindung

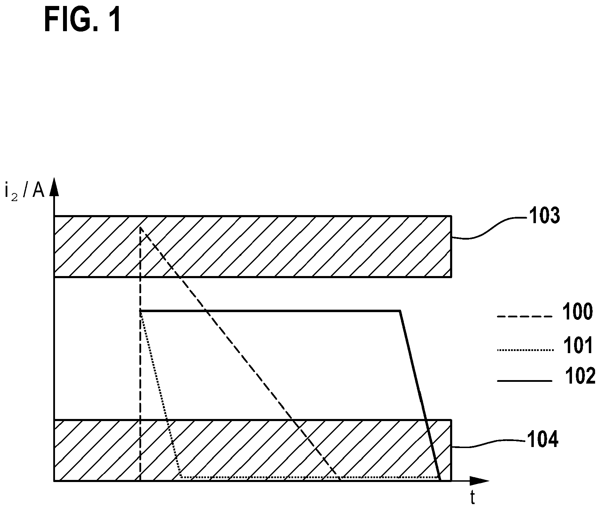

Figur 1 zeigt ein Zeitdiagramm des Zündstromes, also desjenigen Stromes, welcher beim Durchschlagen der Funkenstrecke innerhalb der sekundärseitigen Spule des Aufwärtstransformators als Hochspannungserzeuger fließt. Dabei ist ein Bereich 103 markiert, innerhalb dessen der Strom so hoch ist, dass die Elektroden der Zündkerze durch erhöhte Erosion Schaden nehmen können. Der Bereich 104 markiert diejenigen (geringen) Stromstärken, innerhalb derer eine erforderliche Stabilität des Lichtbogens zum Zünden zündfähigen Gemisches nicht gewährleistet werden kann. So verläuft, wie eingangs beschrieben, ein durch Zündsysteme des Standes der Technik realisierter Strom 100 nach einem steilen Anstieg bis in den die Elektroden gefährdenden Bereich 103 und fällt danach im Wesentlichen linear (in Annäherung an eine exponentielle Entlade-Funktion) ab. Demgegenüber teilt sich die gemäß der vorliegenden Erfindung zur Funkenstrecke geleitete Energie in zwei Energieanteile auf, welche durch einen durch den Aufwärtstransformator fließenden Strom zur Erzeugung eines Zündfunkens und einen durch den Bypass fließenden Strom zur Aufrechterhaltung eines Zündfunkens bereitgestellt werden. Nachdem der (gegenüber dem Stand der Technik kleiner dimensionierte) Aufwärtstransformator einen Lichtbogen erzeugt hat, würde der Strom ohne den erfindungsgemäßen Bypass steil (entsprechend der Entladung der kleinen Sekundärinduktivität - im Bezug auf herkömmliche

Sekundärinduktivitäten)abnehmen (vergleiche Darstellung in Figur 1, 101) und würde schon kurz nach seiner Entstehung im Bereich 104 "verschwinden". Mittels des erfindungsgemäßen Bypasses kann die Stromstärke auf der Sekundärseite, genauer gesagt, in der Funkenstrecke, über einen wesentlich längeren Zeitbereich zwischen den kritischen Bereichen 103 und 104 gehalten werden (vergleiche Darstellung in Figur 1, 102). Nach Abschalten des Bypasses entlädt sich die in der Sekundärspule gespeicherte Energie, wie im Stand der Technik, was zu einem steil abfallenden Funkenstrom führt. Somit ergibt sich ein Gesamtstrom, welcher jedoch deutlich später als die Stromstärke 100 des bekannten Zündsystems in den instabilen Bereich 104 eintaucht.

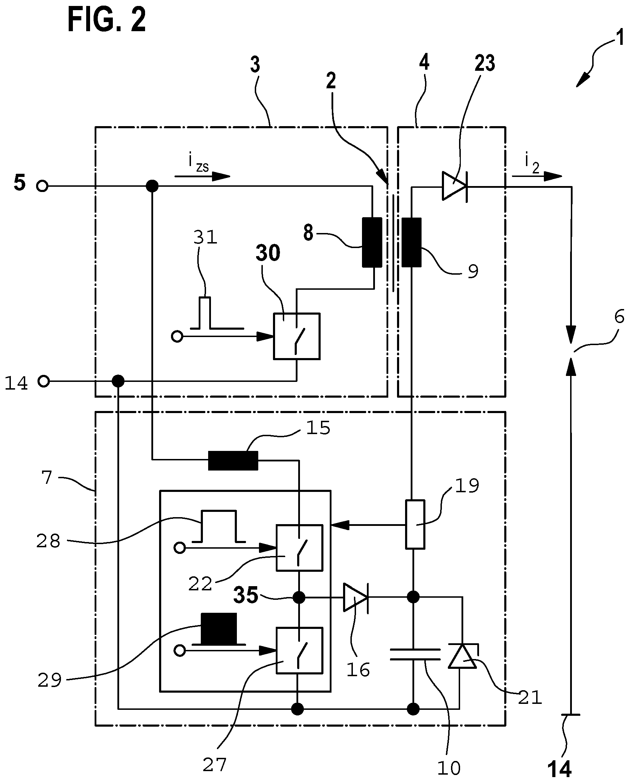

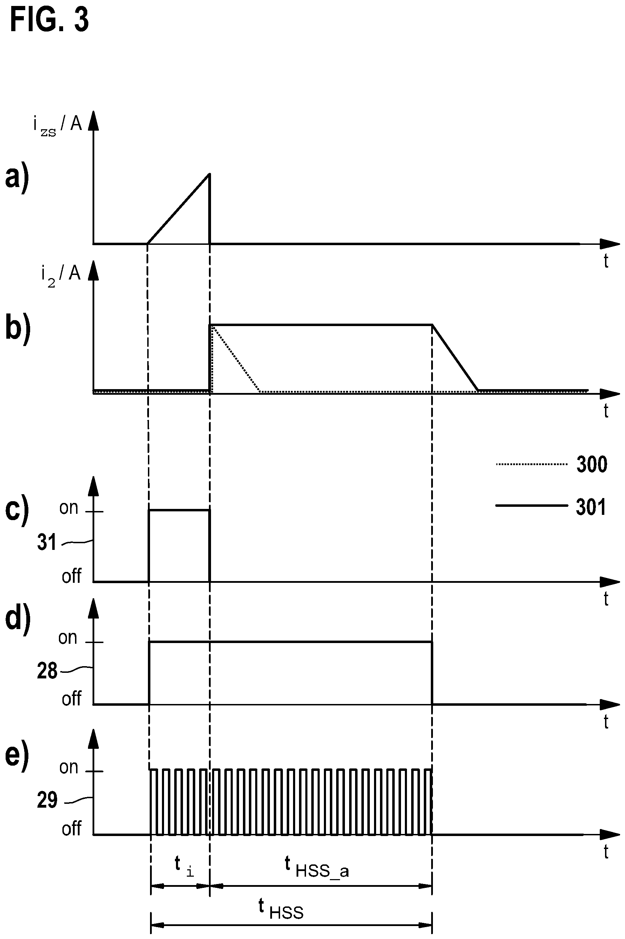

Figur 2 zeigt eine Schaltung, mit welcher die in Figur 1 dargestellten Stromverläufe 101, 102 realisiert werden können. Dargestellt ist ein Zündsystem 1, welches einen Aufwärtstransformator 2 als Hochspannungserzeuger umfasst, dessen Primärseite 3 aus einer elektrischen Energiequelle 5 über einen ersten Schalter 30 mit elektrischer Energie versorgt werden kann. Die Sekundärseite 4 des Aufwärtstransformators 2 wird über eine induktive Kopplung der Primärspule 8 und der Sekundärspule 9 mit elektrischer Energie versorgt und weist eine aus dem Stand der Technik bekannte Diode 23 zur Einschaltfunkenunterdrückung auf, wobei diese Diode alternativ durch die Diode 21 ersetzt werden kann. In einer Masche mit der Sekundärspule 9 und der Diode 23 ist eine Funkenstrecke 6 gegen Masse 14 vorgesehen, über welche der Zündstrom i₂ das brennfähige Gasgemisch entflammen soll. Erfindungsgemäß ist ein Bypass 7 (umrandet mit einer strichpunktierten Linie)zwischen der elektrischen Energiequelle 5 und der Sekundärseite 4 des Aufwärtstransformators 2 vorgesehen. Hierzu ist eine Induktivität 15 über einen Schalter 22 und eine Diode 16 mit einer Kapazität 10 verbunden, deren eines Ende mit der Sekundärspule 9 und deren anderes Ende mit der elektrischen Masse 14 verbunden ist. Die Induktivität dient hierbei als Energiespeicher, um einen Stromfluss aufrecht zu erhalten. Die Diode 16 ist in Richtung der Kapazität 10 leitfähig orientiert. Der Aufbau des Bypass 7 ist somit beispielsweise vergleichbar mit einem Hochsetzsteller. Zwischen der Kapazität 10 und der Sekundärspule 9 ist ein Shunt 19 als Strommessmittel oder Spannungsmessmittel vorgesehen, dessen Messsignal dem Schalter 22 sowie Schalter 27 zugeführt wird. Auf diese Weise sind die Schalter 22, 27 eingerichtet, auf einen definierten Bereich der Stromstärke i₂ durch die Sekundärspule 9 zu reagieren. Die der Diode 16 zugewandte Klemme des Schalters 22 ist über einen weiteren Schalter 27 mit der elektrischen Masse 14 verbindbar. Zur Absicherung der Kapazität 10 ist eine Zenerdiode 21 in Sperrrichtung parallel zur Kapazität 10 geschaltet. Des Weiteren sind Schaltsignale 28, 29 angedeutet, mittels welcher die Schalter 22, 27 angesteuert werden können. Während das Schaltsignal 28 ein Einschalten und "Geschlossenbleiben" für einen gesamten Zündzyklus darstellt, skizziert das Schaltsignal 29 ein zeitgleiches Wechselsignal zwischen "geschlossen" und "offen". Bei geschlossenem Schalter 22 wird die Induktivität 15 über die elektrische Energiequelle 5 mit einem Strom versorgt, welcher bei geschlossenen Schaltern 22, 27 unmittelbar in die elektrische Masse 14 fließt. Bei offenem Schalter 27 wird der Strom über die Diode 16 und den Anschluss 35 auf den Kondensator 10 geleitet. Die sich im Ansprechen auf den Strom in den Kondensator 10 einstellende Spannung addiert sich zu der über der Sekundärspule 9 des Aufwärtstransformators 2 abfallenden Spannung, wodurch sich eine Ausgangsspannung ergibt, die den Lichtbogen an der Funkenstrecke 6 stützt. Dabei entlädt sich jedoch der Kondensator 10, so dass durch Schließen des Schalters 27 Energie in das magnetische Feld der Induktivität 15 gebracht werden kann, um bei einem erneuten Öffnen des Schalters 27 diese Energie wieder auf den Kondensator 10 zu laden. Erkennbar wird die Ansteuerung 31 des in der Primärseite 3 vorgesehenen Schalters 30 deutlich kürzer gehalten, als dies für die Schalter 22 und 27 der Fall ist. Diese Vorgänge werden in Verbindung mit Figur 3 eingehender diskutiert. Da der Schalter 22 für die erfindungsgemäßen Vorgänge keine entscheidende Funktion übernimmt, sondern die Schaltung lediglich ein- bzw. ausschaltet, ist dieser lediglich optional und kann daher auch entfallen.

Figur 3 zeigt im Diagramm a einen kurzen und steilen Anstieg des Primärspulenstroms i_{ZS}, welcher sich während derjenigen Zeit einstellt, in welcher sich der Schalter 30 (siehe Diagramm 3c) im leitenden Zustand ("ON") befindet. Mit Ausschalten des Schalters 30 fällt auch der Primärspulenstrom i_{ZS} auf 0 A ab. Diagramm b zeigt die Verläufe des Sekundärspulenstroms i₂, wie sie sich für eine Verwendung des in Figur 2 dargestellten Systems 1 mit (301) und ohne (300) Bypass ergeben. Sobald sich der Primärspulenstrom i_{ZS} aufgrund eines Öffnens des Schalters 30 zu 0 ergibt und sich damit die im Aufwärtstransformator gespeicherte magnetische Energie in Form eines Lichtbogens über der Funkenstrecke 6 entlädt, stellt sich ein Sekundärspulenstrom i₂ ein, der ohne Bypass (300) rasch gegen 0 abfällt. Im Gegensatz hierzu wird durch einen geschlossenen Schalter 22 (siehe Diagramm d) und eine pulsförmige Ansteuerung (siehe Diagramm e, Schaltsignal 29) des Schalters 27 ein im Wesentlichen konstanter Sekundärspulenstrom i₂ (301) über die Funkenstrecke 6 getrieben. Wobei der Sekundärspulenstrom i₂ von der Brennspannung an der Funkenstrecke 6 abhängt und hier der Einfachheit halber von einer konstanten Brennspannung ausgegangen wird. Erst nach Unterbrechung des Bypasses 7 durch Öffnen des Schalters 22 und Öffnen des Schalters 27 fällt nun auch der Sekundärspulenstrom i₂ gegen 0 ab. Aus Diagramm b) ist erkennbar, dass die jeweils abfallende Flanke um eine Zeitdauer t_{HSS_a} verzögert wird. Die gesamte Zeitdauer, während welcher der Bypass verwendet wird, ist als t_{HSS} und die Zeitdauer, während welcher Energie primärseitig in den Aufwärtstransformator 2 gegeben wird, als tᵢ gekennzeichnet. Der Startzeitpunkt von t_{HSS} gegenüber tᵢ kann variabel gewählt werden.

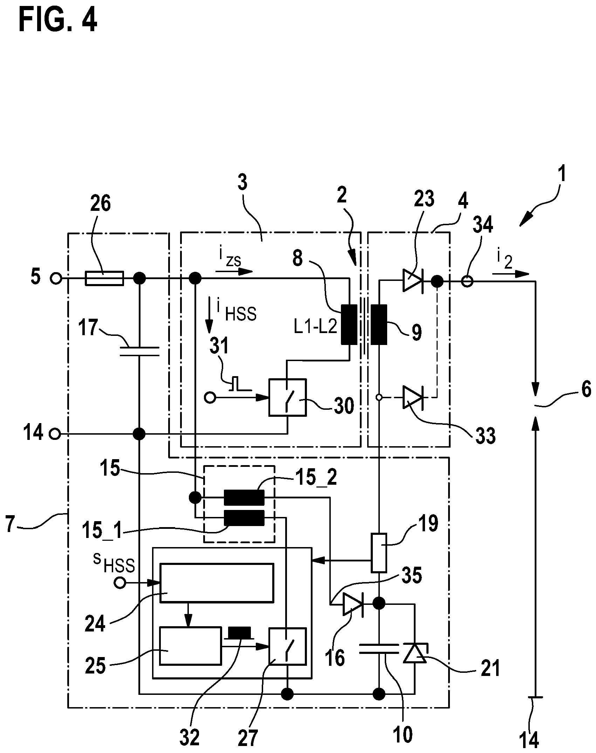

Figur 4 zeigt eine gegenüber Figur 2 alternative Ausführungsform einer Schaltung eines Zündsystems 1 gemäß der vorliegenden Erfindung. Am Eingang der Schaltung, mit anderen Worten also am Anschluss zur elektrischen Energiequelle 5, ist eine Sicherung 26 vorgesehen. Zur Stabilisierung der Eingangsspannung ist darüber hinaus eine Kapazität 17 parallel zum Eingang der Schaltung bzw. parallel zur elektrischen Energiequelle 5 vorgesehen. Weiter ist die Induktivität 15 durch einen Transformator mit einer Primärseite 15_1 und einer Sekundärseite 15_2 ersetzt worden, wobei die Primärseite 15_1 eine Primärspule und die Sekundärseite 15_2 eine Sekundärspule aufweist. Die ersten Anschlüsse des Transformators sind jeweils mit der elektrischen Energiequelle 5 bzw. der Sicherung 26 verbunden. Dabei ist ein zweiter Anschluss der Primärseite 15_1 über einen Schalter 27 mit der elektrischen Masse 14 verbunden. Der zweite Anschluss der Sekundärseite 15_2 des Transformators 15 ist nun ohne Schalter direkt mit der Diode 16 verbunden. Aufgrund des Übertragungsverhältnisses wirkt ein Schaltvorgang durch den Schalter 27 im Zweig der Primärseite 15_1 auch auf der Sekundärseite 15_2. Da jedoch Strom und Spannung gemäß dem Übersetzungsverhältnis auf der einen Seite höher bzw. niedriger als auf der anderen Seite des Transformators 15 sind, lassen sich für Schaltvorgänge günstigere Dimensionierungen für den Schalter 27 finden. Beispielsweise können geringere Schaltspannungen realisiert werden, wodurch die Dimensionierung des Schalters 27 einfacher und kostengünstiger möglich ist. Gesteuert wird der Schalter 27 über eine Ansteuerung 24, welche über einen Treiber 25 mit dem Schalter 27 verbunden ist. Wie in Figur 2 gezeigt, ist ein Shunt 19 vorgesehen, um den sekundärseitigen Strom i₂ bzw. die Spannung über der Kapazität 10 zu messen und diesen bzw. diese der Ansteuerung 24 des Schalters 27 bereitzustellen. Überdies erhält die Ansteuerung 24 ein Steuersignal s_{HSS}. Über dieses kann einerseits die Einbringung von Energie über den Bypass in die Sekundärseite ein- und ausgeschaltet werden. Dabei kann auch die Leistung der durch den Bypass bzw. in die Funkenstrecke eingebrachten elektrischen Größe, insbesondere über die Frequenz und/oder das Puls-Pause-Verhältnis über ein geeignetes Steuersignal gesteuert werden. Optional kann ein nichtlinearer Zweipol, im Folgenden durch eine Hochspannungsdiode 33 symbolisiert, der sekundärseitigen Spule des Hochsetzstellers parallel geschaltet werden. Diese Hochspannungsdiode 33 überbrückt den Hochspannungserzeuger 2 sekundärseitig, wodurch die durch den Bypass 7 in Form eines Hochsetzstellers (umrandet mit einer strichpunktierten Linie) gelieferte Energie direkt an die Funkenstrecke 6 geführt wird, ohne durch die Sekundärspule 9 des Hochspannungserzeugers 2 geführt zu werden. Somit entstehen keine Verluste über der Sekundärspule 9 und der Wirkungsgrad steigt. Die übrigen Elemente der in Figur 4 dargestellten Zeichnung korrespondieren mit denjenigen, wie sie in Figur 2 gezeigt und oben bereits diskutiert worden sind.

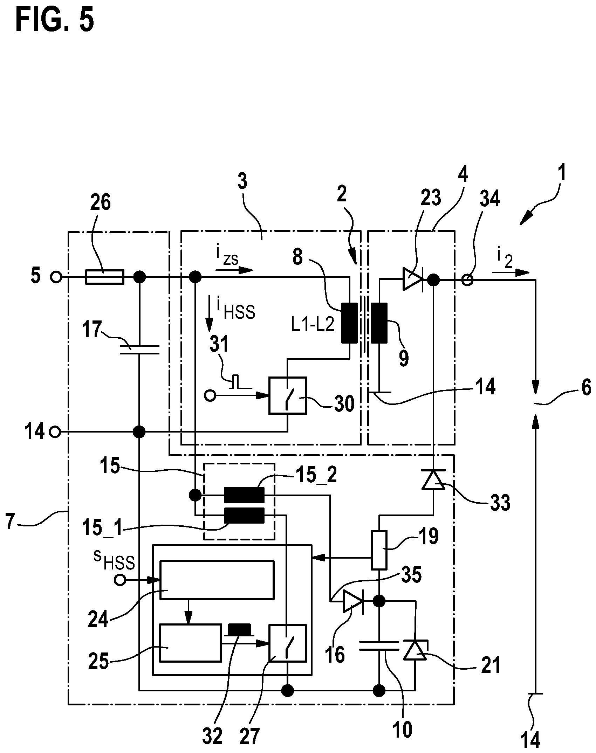

Figur 5 zeigt eine alternative Ausführungsform der in Figur 4 vorgestellten Schaltung. Darin ist eine Hochspannungsdiode 33 mit Flussrichtung zur Funkenstrecke zwischen dem Energiespeicher 10 des Bypasses 7 in Form eines Hochsetzstellers (umrandet mit einer strichpunktierten Linie) und der Funkenstrecke 6 angeordnet. Hierdurch überbrückt die Hochspannungsdiode 33 den Hochspannungserzeuger 2 sekundärseitig, wodurch die durch den Bypass 7 gelieferte Energie direkt an die Funkenstrecke 6 geführt wird, ohne durch die Sekundärspule 9 des Hochspannungserzeugers 2 geführt zu werden. Somit entstehen keine Verluste über der Sekundärspule 9 und der Wirkungsgrad steigt.

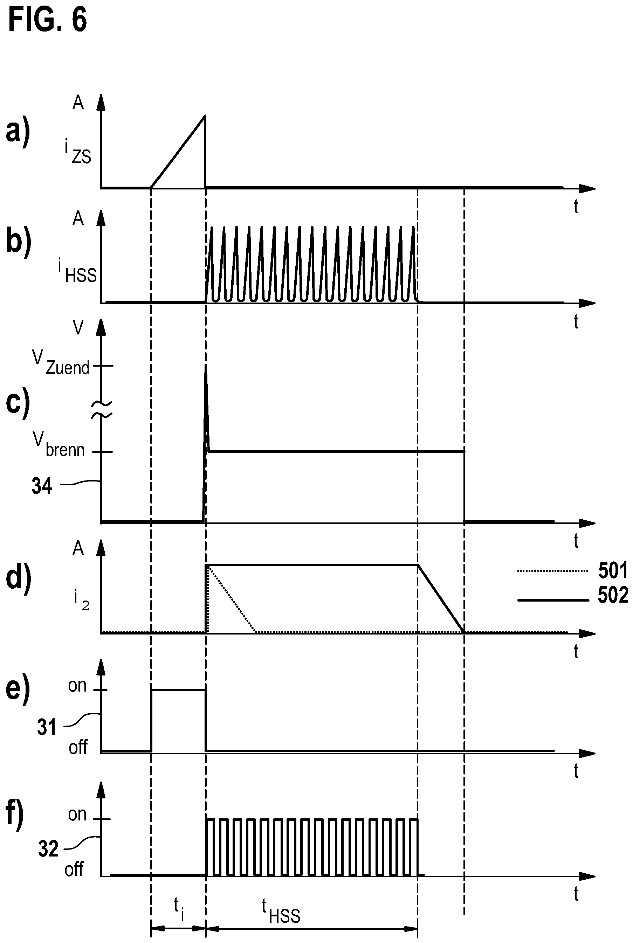

Figur 6 zeigt Zeitdiagramme für a) den Zündspulenstrom i_{ZS}, b) den Bypassstrom i_{HSS}, c) die ausgangsseitige Spannung über der Funkenstrecke 6, d) den Sekundärspulenstrom i₂ für das in Figur 4 dargestellte Zündsystem ohne (501) und mit (502) Verwendung des erfindungsgemäßen Bypasses, e) das Schaltsignal 31 des Schalters 30 und f) das Schaltsignal 32 des Schalters 27 für das Pulssignal im Bypass 7. Zu den bereits in Verbindung mit Figur 3 gezeigten Diagrammen wird der Kürze halber auf die obige Diskussion verwiesen. Diagramm b) veranschaulicht überdies die Stromaufnahme des erfindungsgemäßen Bypasses 7, welche durch eine pulsförmige Ansteuerung des Schalters 27 zustande kommt. In der Praxis haben sich als Schaltfrequenz Taktraten im Bereich mehrerer zehn kHz bewährt, um einerseits entsprechende Spannungen und andererseits akzeptable Wirkungsgrade zu realisieren. Beispielhaft seien die ganzzahligen Vielfachen von 10000 Hz im Bereich zwischen 10 und 100 kHz als mögliche Bereichsgrenzen genannt. Zur Regelung der an die Funkenstrecke abgegebenen Leistung empfiehlt sich dabei eine, insbesondere stufenlose, Regelung des Puls-Pause-Verhältnisses des Signals 29 bzw. 32 zur Erzeugung eines entsprechenden Ausgangssignals. Zudem ist es auch möglich, durch einen zusätzlichen DC-DC-Wandler die von der elektrischen Energiequelle gelieferte Spannung zu erhöhen, bevor diese im erfindungsgemäßen Bypass weiter verarbeitet wird.

Es werden zwei Funktionen, welche die Aufwärtstransformatoren bekannter Zündsysteme in sich vereint haben, vorteilhaft aufgespalten, um eine geeignete Dimensionierung des Hochspannungserzeugers und effizientere Ausnutzung der elektrischen Energie zu ermöglichen. Hierzu wird ein Hochspannungserzeuger vorgesehen, um gemäß dem Stand der Technik einen Zündfunken zu generieren. Ein Bypass ist eingerichtet, um den bestehenden Lichtbogen über der Funkenstrecke aufrechtzuerhalten. Hierzu entnimmt ein Bypass Energie aus beispielsweise derselben Energiequelle wie die Primärseite des Hochspannungserzeugers und verwendet diese, um die abklingende Flanke des Funkenstroms zu stützen und ihr Abfallen unterhalb der Brennspannung somit zu verzögern. Der Fachmann erkennt dabei bevorzugte Ausführungsformen des erfindungsgemäßen Bypasses als nach Art eines Hochsetzstellers arbeitende Schaltungsstrukturen. Dabei ist der Eingang des Hochsetzstellers parallel zur elektrischen Energiequelle geschaltet, während der Ausgang des Hochselbststellers in Reihe oder parallel zur Sekundärspule des Hochspannungserzeugers angeordnet ist. Der Begriff "Energiequelle" ist im Rahmen der vorliegenden Erfindung breit auszulegen und kann weitere Energiewandlungseinrichtungen (z.B. DC-DC-Wandler) umfassen.

Um einen Zündfunken an der Funkenstrecke 6 zu erzeugen, wird die Primärspule 8 des ersten Spannungserzeugers 2 in einem ersten Schritt a bestromt und die Bestromung der Primärspule 8 zum Erzeugen einer Spannung in der Sekundärspule 9 des ersten Spannungserzeugers 2 anschließend unterbrochen. Um den erzeugten Zündfunken an der Funkenstrecke 6 möglichst lange aufrechtzuerhalten, wird daraufhin in einem Schritt b der zweite Spannungserzeuger 7, insbesondere der Hochsetzsteller, zum Stützen der von dem ersten Spannungserzeuger 2 erzeugten Spannung betrieben. Wahlweise kann der zweite Spannungserzeuger 7 eingeschaltet werden, noch bevor die Bestromung der Primärspule 8 unterbrochen wird.
Zur Steuerung oder Regelung des Zündsystems 1 wird in einem Schritt c der Sekundärspulenstrom i₂, der auch als Funkenstrom bezeichnet wird, gemessen, insbesondere mit dem Shunt 19. Alternativ oder zusätzlich kann die Ausgangsspannung u₂ auf der Sekundärseite 4 des Zündsystems 1 gemessen werden. Wahlweise kann auch eine der Ausgangspannung korrespondierende Spannung, z.B. die Spannung über dem Hochsetzstellerausgang an der Kapazität 1 gemessen werden. In der Steuerung wird in einem Schritt d laufend ermittelt, ob der gemessene Funkenstrom i₂ einen ersten Schwellwert unterschreitet oder ob der gemessene Funkenstrom i₂ gleich null ist. Wenn eine dieser beiden Bedingungen erfüllt sind, ist eine Schwellwertbedingung erfüllt. Es kann vorgesehen sein, dass die Schwellwertbedingung für den Fall, dass der Funkenstrom i₂ gleich null gemessen wurde, nur dann als erfüllt gilt, wenn der Funkenstrom i₂ nach Ablauf einer vorbestimmten Zeit immer noch gleich null ist. Auf diese Weise kann gewährleistet werden, dass der Funkenstrom i₂ sicher abgerissen ist und eine Stabilisierung nicht mehr möglich ist.
Alternativ kann bei einer Messung der Ausgangsspannung u₂ laufend ermittelt werden, ob die Ausgangsspannung u₂ einen zweiten Schwellwert überschreitet. Wenn diese Bedingung erfüllt ist, gilt die Schwellwertbedingung als erfüllt.

Wenn die Schwellwertbedingung erfüllt ist, wird auf einen Funkenabriss oder einen instabilen Funken geschlossen, der sich nicht mehr selbst stabilisieren wird, und eine Wiederzündung eingeleitet. Dies geschieht erfindungsgemäß dadurch, dass in einem weiteren Schritt e1 ein erneutes Bestromen der Primärspule 8 des ersten Spannungserzeugers 2 stattfindet, und zwar für eine vorbestimmte Zeit oder solange, bis ein Primärspulenstrom i_{ZS} einen vorbestimmten dritten Schwellwert erreicht. Daraufhin wird in einem Schritt e2 die Bestromung der Primärspule 8 unterbrochen, um eine Spannung in der Sekundärspule 9 des ersten Spannungserzeugers 2 und dadurch einen neuen Zündfunken an der Funkenstrecke 6 zu erzeugen. Daraufhin erfolgt gemäß Schritt f ein weiteres oder erneutes Betreiben des zweiten Spannungserzeugers 7, um den erzeugten neuen Zündfunken an der Funkenstrecke 6 möglichst lange aufrechtzuerhalten. Die Schritte c bis f werden erfindungsgemäß laufend wiederholt. Der zweite Spannungserzeuger 7 kann bei der Ausführung des Schrittes e betrieben werden oder ausgeschaltet sein.

Der erste und/oder der zweite Schwellwert kann abhängig von bestimmten Betriebsparametern, insbesondere von einer Drehzahl und/oder der Last, eines mit dem Zündsystem 1 zusammenwirkenden Verbrennungsmotors sein.

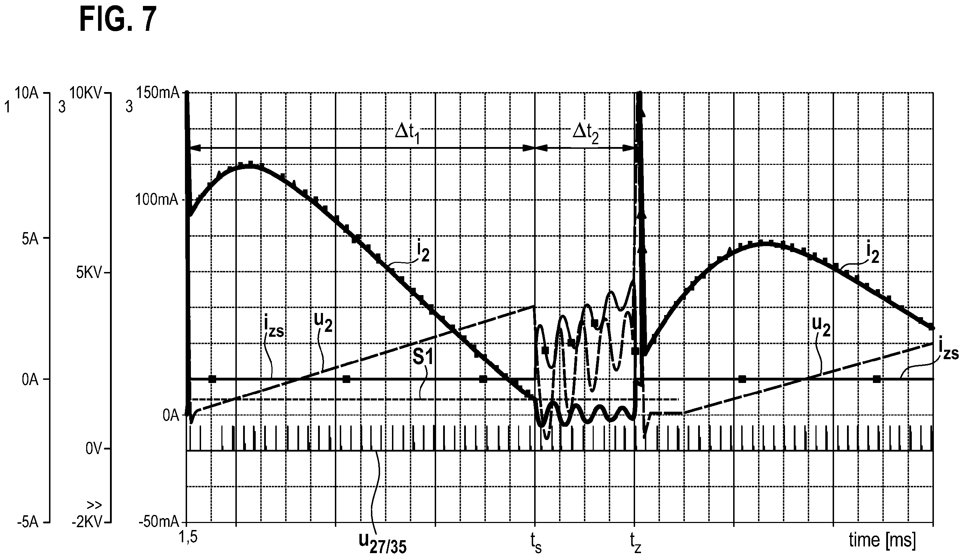

Figur 7 zeigt ein Strom/Spannungs-Zeitdiagramm, das den Verlauf des Primärspulenstroms i_{ZS}, des Funkenstroms i₂, der Ausgangsspannung u₂ und einer Spannung u_{27/35} während der erfindungsgemäßen Verfahrensschritte e und f darstellt. Die Spannung u_{27/35} ist in der Ausführung nach Fig.4 an der Verbindung zwischen dem Schalter 27 und der Induktivität 15_1 gemessen und in der Ausführung nach Fig.2 an dem Knoten 35. Auf der Abszisse ist die Zeit aufgetragen, wobei kurz nach dem Zeitpunkt von 1,5 ms die erste Zündung erfolgt.

In Fig.7 ist dargestellt, dass die Ausgangsspannung u2 in einem ersten Zeitfenster Δt1 durch entsprechende Auslenkung des Lichtbogens aufgrund hoher Strömungsgeschwindigkeit im Brennraum linear steigt. Entsprechend kommt es im Zeitfenster Δt1 zu einer stetigen Reduzierung des Funkenstromes i₂, wobei der Funkenstrom zunehmend instabil wird. Zum Zeitpunkt tₛ, an dem der Funkenstrom i₂ den ersten Schwellwert S1 unterschreitet, erfolgt gemäß Schritt e1 ein erneutes Bestromen der Primärspule 8, was im Zeitfenster Δt2 zu einem Anstieg des Primärspulenstroms i_{ZS} führt. Zum Zeitpunkt t_{Z} wird gemäß Schritt e2 die Bestromung der Primärspule 8 unterbrochen und damit der neue Zündfunken an der Funkenstrecke 6 erzeugt. Der neue Zündfunken wird durch den Betrieb des zweiten Spannungserzeugers 7 mit Energie gespeist, so dass dieser möglichst lange aufrechterhalten bleibt. Wie in Figur 7 gezeugt, wird der zweite Spannungserzeuger 7 auch im Zeitfenster Δt2 betrieben, in dem der erste Spannungserzeuger 2 wieder mit Energie aufgeladen wird.

## Patentansprüche

1. Verfahren zum Betreiben eines Zündsystems (1) mit den Schritten
(a) Bestromen einer Primärspule (8) eines ersten Spannungserzeugers (2) und Unterbrechen der Bestromung der Primärspule (8) zum Erzeugen einer Spannung in einer Sekundärspule (9) des ersten Spannungserzeugers (2), um einen Zündfunken an einer Funkenstrecke (6) zu erzeugen,
(b) Betreiben eines zweiten Spannungserzeugers (7) zum Stützen des von dem ersten Spannungserzeuger (2) erzeugten Zündfunkens, um den erzeugten Zündfunken an der Funkenstrecke (6) aufrechtzuerhalten,
(c) Messen eines Funkenstroms (i₂) und/oder einer Ausgangsspannung (u₂) und/oder einer der Ausgangspannung korrespondierenden Spannung auf der Sekundärseite (4) des Zündsystems (1),
(d) Ermitteln, ob eine Schwellwertbedingung erfüllt ist, indem ermittelt wird, ob der Funkenstrom (i₂) einen ersten Schwellwert (S1) unterschreitet oder ob die Ausgangsspannung (u₂) oder die der Ausgangspannung (u₂) korrespondierende Spannung einen zweiten Schwellwert überschreitet oder ob der Funkenstrom (i₂) gleich null ist oder ob der Funkenstrom (i₂) gleich null ist und nach Ablauf einer vorbestimmten Zeit immer noch gleich null ist,
**gekennzeichnet durch** die Schritte
(e) Unter der Voraussetzung, dass die Schwellwertbedingung erfüllt ist:
(e1) erneutes Bestromen der Primärspule (8) des ersten Spannungserzeugers (2) für eine vorbestimmte Zeit oder solange, bis ein Primärspulenstrom (i_{ZS}) einen vorbestimmten dritten Schwellwert erreicht, daraufhin
(e2) Unterbrechen der Bestromung der Primärspule (8) zum Erzeugen einer Spannung in der Sekundärspule (9) des ersten Spannungserzeugers (2), um einen neuen Zündfunken an der Funkenstrecke (6) zu erzeugen,
(f) Weiteres oder erneutes Betreiben des zweiten Spannungserzeugers (7) zum Stützen des von dem ersten Spannungserzeuger (2) erzeugten Zündfunkens, um den erzeugten Zündfunken an der Funkenstrecke (6) aufrechtzuerhalten.

2. Verfahren nach Anspruch 1, **dadurch gekennzeichnet, dass** die Schritte (c) bis (f) laufend wiederholt werden.

3. Verfahren nach Anspruch 1, **dadurch gekennzeichnet, dass** der zweite Spannungserzeuger (7) bei der Ausführung des Schrittes (e) betrieben wird oder ausgeschaltet ist.

4. Verfahren nach einem der vorhergehenden Ansprüche, **dadurch gekennzeichnet, dass** der erste und/oder zweite Schwellwert abhängig ist von bestimmten Betriebsparametern eines Verbrennungsmotors, insbesondere einer Drehzahl und/oder der Last des Verbrennungsmotors.

## Claims

1. Method for operating an ignition system (1) having the steps of
(a) energizing a primary coil (8) of a first voltage generator (2) and interrupting the energization of the primary coil (8) to generate a voltage in a secondary coil (9) of the first voltage generator (2) in order to generate an ignition spark at a spark gap (6),
(b) operating a second voltage generator (7) to support the ignition spark generated by the first voltage generator (2) in order to maintain the generated ignition spark at the spark gap (6),
(c) measuring a spark current (i₂) and/or an output voltage (u₂) and/or a voltage corresponding to the output voltage on the secondary side (4) of the ignition system (1),
(d) identifying whether a threshold value condition is met by virtue of identifying whether the spark current (i₂) undershoots a first threshold value (S1) or whether the output voltage (u₂) or the voltage corresponding to the output voltage (u₂) exceeds a second threshold value or whether the spark current (i₂) is equal to zero or whether the spark current (i₂) is equal to zero and is still equal to zero after a predetermined time has passed,
**characterized by** the steps of
(e) provided that the threshold value condition is met:
(e1) re-energizing the primary coil (8) of the first voltage generator (2) for a predetermined time or until a primary coil current (i_{ZS}) reaches a predetermined third threshold, then
(e2) interrupting the energization of the primary coil (8) to generate a voltage in the secondary coil (9) of the first voltage generator (2) in order to generate a new ignition spark at the spark gap (6),
(f) further or re-energizing the second voltage generator (7) to support the ignition spark generated by the first voltage generator (2) in order to maintain the generated ignition spark at the spark gap (6).

2. Method according to Claim 1, **characterized in that** steps (c) to (f) are repeated continuously.

3. Method according to Claim 1, **characterized in that** the second voltage generator (7) is operated or is switched off during the execution of step (e).

4. Method according to one of the preceding claims, **characterized in that** the first and/or second threshold value is dependent on specific operating parameters of an internal combustion engine, in particular on a rotational speed and/or on the load of the internal combustion engine.

## Revendications

1. Procédé de fonctionnement d'un système d'allumage (1) avec les étapes de
(a) alimentation d'un bobinage primaire (8) d'un premier générateur de tension (2) et interruption de l'alimentation du bobinage primaire (8) pour générer une tension dans un bobinage secondaire (9) du premier générateur de tension (2), afin de générer une étincelle sur un éclateur (6),
(b) fonctionnement d'un deuxième générateur de tension (7) pour assister l'étincelle générée par le premier générateur de tension (2), afin de maintenir l'étincelle générée sur l'éclateur (6),
(c) mesure d'un courant d'étincelle (i₂) et/ou d'une tension de sortie (u₂) et/ou d'une tension sur le côté secondaire (4) du système d'allumage (1) correspondant à la tension de sortie,
(d) détermination de la satisfaction d'une condition de valeur seuil, où il est déterminé si le courant d'étincelle (i₂) passe en dessous d'une première valeur seuil (S1) ou si la tension de sortie (u₂) ou la tension correspondant à la tension de sortie (u₂) dépasse une deuxième valeur seuil ou si le courant d'étincelle (i₂) est nul ou si le courant d'étincelle (i₂) est nul et est toujours nul après écoulement d'une durée prédéfinie,
**caractérisé par** les étapes suivantes
(e) à condition que la condition de valeur seuil soit satisfaite :
(e1) nouvelle alimentation du bobinage primaire (8) du premier générateur de tension (2) pendant une durée prédéfinie ou jusqu'à ce qu'un courant de bobinage primaire (i_{ZS}) atteigne une troisième valeur seuil prédéfinie, de ce fait
(e2) interruption de l'alimentation du bobinage primaire (8) pour générer une tension dans le bobinage secondaire (9) du premier générateur de tension (2), afin de générer une nouvelle étincelle sur l'éclateur (6),
(f) fonctionnement supplémentaire ou renouvelé du deuxième générateur de tension (7) pour assister l'étincelle générée par le premier générateur de tension (2), afin de maintenir l'étincelle générée sur l'éclateur (6).

2. Procédé selon la revendication 1, **caractérisé en ce que** les étapes (c) à (f) sont répétées constamment.

3. Procédé selon la revendication 1, **caractérisé en ce que** le deuxième générateur de tension (7) fonctionne ou est éteint lors de l'exécution de l'étape (e).

4. Procédé selon l'une des revendications précédentes, **caractérisé en ce que** la première et/ou la deuxième valeur seuil est fonction de paramètres opérationnels définis d'un moteur à combustion, en particulier d'une vitesse de rotation et/ou de la charge du moteur à combustion.
